Europäisches Patentamt

European Patent Office

Office européen des brevets

(11) Numéro de publication: **0 136 238**
**B1**

(12) **FASCICULE DE BREVET EUROPÉEN**

(45) Date de publication du fascicule du brevet:
08.03.89

(21) Numéro de dépôt: **84401906.7**

(22) Date de dépôt: **25.09.84**

(51) Int. Cl.⁴: **G 01 B 7/28**, B 23 K 9/02

(54) Dispositif pour mesurer la proximite d'une surface metallique conductrice.

(30) Priorité: **27.09.83 FR 8315323**

(43) Date de publication de la demande:
**03.04.85 Bulletin 85/14**

(45) Mention de la délivrance du brevet:
**08.03.89 Bulletin 89/10**

(84) Etats contractants désignés:
**DE FR GB IT SE**

(56) Documents cité:
**EP-A-0 064 454**
**FR-A-2 083 038**
**FR-A-2 424 515**
**FR-A-2 507 310**
**US-A-3 309 539**
**US-A-3 703 097**

(73) Titulaire: **COMMISSARIAT A L'ENERGIE ATOMIQUE, 31/33, rue de la Fédération, F-75015 Paris (FR)**

(72) Inventeur: **Clergeot, Henri, 4, allée de Québec, F-91300 Massy (FR)**
Inventeur: **Detriche, Jean- Marie, 38 rue de Tourville, F-78100 Saint Germain En Laye (FR)**
Inventeur: **Monteil, François, 20 rue Louis Blériot, F-91000 Bondoufle (FR)**
Inventeur: **Placko, Dominique, 21, Allée de la Toison d'Or, F-94000 Creteil (FR)**

(74) Mandataire: **Mongrédien, André, c/o BREVATOME 25, rue de Ponthieu, F-75008 Paris (FR)**

LIBER, STOCKHOLM 1989

## Description

La présente invention concerne un dispositif destiné à mesurer la distance à une surface métallique conductrice au moyen d'au moins un capteur à courants de Foucault disposé en vis-à-vis de la surface.

Ce dispositif trouve son application dans les techniques liées à la robotique. A titre d'exemple, un tel dispositif peut être utilisé comme détecteur de profil dans une installation d'assemblage robotisée, et comme détecteur de joints dans une machine de soudage automatique.

Dans l'état actuel de la technique, on connaît du brevet français n° 2.507.310 (qui divulgue les caractéristiques techniques énoncées dans le préambule de la présente revendication 1) déposé par le C.E.A. le 4 juin 1981 un dispositif pour détecter le profil d'une surface. A cet effet, on peut utiliser soit une bobine à courants de Foucault effectuant une mesure de proximité et avec lesquelles on balaye le profil à déterminer, soit des bobines à courants de Foucault disposées en lignes ou matrices et alimentées en même temps par une source délivrant une tension sinusoïdale dont la fréquence est supérieure à 100 kHz, les signaux délivrés par les bobines étant traités à tour de rôle par un circuit de traitement unique grâce à des moyens de multiplexage.

Dans ce dispositif connu, le circuit de traitement comprend des moyens de détection sensibles à un signal de référence délivré par un oscillateur. Ce signal de référence est un signal de même fréquence et déphasé d'une angle déterminé, par rapport au signal délivré par chaque bobine. Cette technique de mesure ne permet pas de s'affranchir de la nature du métal, car la différence de phase mesurée n'est pas indépendante des variations des pertes par courants de Foucault selon les métaux en vis-à-vis.

On connaît aussi du brevet FR-A-2 424 515 déposé le 25 avril 1979 par NIPPON KOKAN KABUSHIKI KAISHA un dispositif détecteur de profil dans lequel les différentes bobines à courants de Foucault d'une matrice de capteurs sont excitées de façon séquentielle, de telle sorte que les signaux qu'elles délivrent peuvent être traités à tour de rôle par un circuit de traitement.

Un tel dispositif permet de s'affranchir de la difficulté d'équilibrage des bobines qui travaillent chacune à leur tour. Toutefois, la mesure est ralentie par rapport au dispositif précédent, en raison du temps nécessaire à l'établissement du courant dans les bobines lors de la commutation d'une bobine à une autre.

La présente invention a précisément pour objet un dispositif pour mesurer la distance à une surface métallique conductrice ne présentant pas les inconvénients des dispositifs selon la technique antérieure et permettant notamment de réaliser une mesure de réluctance dans l'air, ce qui permet de s'affranchir de la perméabilité du métal et de l'échauffement dans la mesure de distance.

Afin de définir une technique de mesure qui soit autant que possible insensible à la nature du métal en regard des bobines, on utilise un dispositif selon l'invention tel que défini dans la revendication 1. Selon un autre mode de réalisation de l'invention, afin d'éliminer toutes les variations de signal non consécutives à des variations de distance, la source comprend un deuxième oscillateur et des moyens pour asservir ledit oscillateur en amplitude et en fréquence.

Selon une première variante de réalisation de l'invention, la bobine du capteur est montée sur un circuit magnétique en forme de U ouvert dans la direction de ladite surface, ladite source étant branchée directement aux bornes de la bobine, et le signal sinusoïdal délivré par le capteur étant obtenu à partir du courant parcourant la bobine au moyen d'un transformateur courant-tension à faible impédance d'entrée.

Selon une deuxième variante de réalisation de l'invention, le capteur comprend un circuit magnétique en forme de E ouvert dans la direction de ladite surface, une bobine émettrice montée sur l'une des branches d'extrémité et une bobine réceptrice enroulée en partie sur l'autre branche d'extrémité et en partie sur la branche intermédiaire, ladite source étant branchée aux bornes de la bobine émettrice, et le signal sinusoïdal délivré par le capteur étant obtenu par mise en opposition des signaux induits dans les deux parties de la bobine réceptrice. Un tel capteur est insensible aux variations de température.

Selon une troisième variante de réalisation de l'invention, le capteur comprend un circuit magnétique en forme de H, une bobine d'excitation montée sur la branche intermédiaire du circuit magnétique, une bobine réceptrice montée sur les branches d'extrémité du circuit magnétique et un plan conducteur de référence disposé à une distance donnée des extrémités des branches d'extrémité situées du côté opposé à la surface dont on désire mesurer la distance, ladite source étant branchée aux bornes de la bobine d'excitation.

Lorsque le dispositif selon l'invention est appliqué à la détection du profil d'une surface métallique conductrice, il comprend au moins une série de capteurs à courants de Foucault alignés, ladite source alimentant simultanément les capteurs, des moyens de multiplexage étant prévus pour injecter successivement dans les moyens de traitement chacun des signaux délivrés par les capteurs.

Afin d'améliorer la résolution axiale d'un capteur multipoints, le dispositif peut alors comprendre plusieurs capteurs élémentaires juxtaposés, chaque capteur élémentaire comportant au moins une bobine à courants de Foucault montée sur un circuit magnétique ouvert dans la direction d'un objet metallique dont on desire mesurer la distance, les capteurs élémentaires étant juxtaposés de telle sorte que leurs circuits magnétiques soient disposés dans des plans parallèles.

Enfin, afin d'améliorer la directivité et l'insensibilité aux parasites, le dispositif peut aussi comprendre un capteur multipoints comprenant des plaques métalliques disposées entre les capteurs élémentaires, servant de blindage entre ces derniers et de guide pour les lignes de champ de façon à canaliser le flux magnétique dans la direction de l'objet à détecter.

On décrira, maintenant, à titre d'exemple non limitatif, différentes variantes de réalisation de l'invention en se référant aux dessins annexés, dans lesquels:

- la figure 1 représente sous forme de diagramme un dispositif pour détecter le profil d'une surface métallique conductrice, réalisé conformément à l'invention;
- la figure 2 représente sous forme de diagramme le circuit d'alimentation asservi en fréquence, en phase et en amplitude du dispositif de la figure 1;
- les figures 3a, 3b et 3c représentent en perspective trois variantes de réalisation de chacun des capteurs constituant la série de capteurs utilisée dans le dispositif de la figure 1;
- les figures 4a et 4b sont des vues en perspective montrant l'arrangement en série alignée des capteurs réalisés respectivement selon les variantes des figures 3a et 3b;
- la figure 5 représente l'un des étages tampon qui sont prévus à la sortie de chacun des capteurs du dispositif de la figure 1 lorsque ces capteurs sont réalisés conformément à la variante des figures 3a et 4a;
- la figure 6 représente les étages de détection synchrone et de filtrage du circuit de traitement du dispositif de la figure 1;
- la figure 7 est un schéma montrant l'allure des signaux en différents points du dispositif de la figure 1;
- la figure 8 est un diagramme représentant les circuits de correction de l'amplitude et de la composante continue des signaux sortant du circuit de la figure 6, le convertisseur analogique-numérique et le circuit permettant de linéariser les signaux numériques obtenus, et
- la figure 9 représente les courbes d'étalonnage mémorisées dans le circuit de linéarisation de la figure 8.

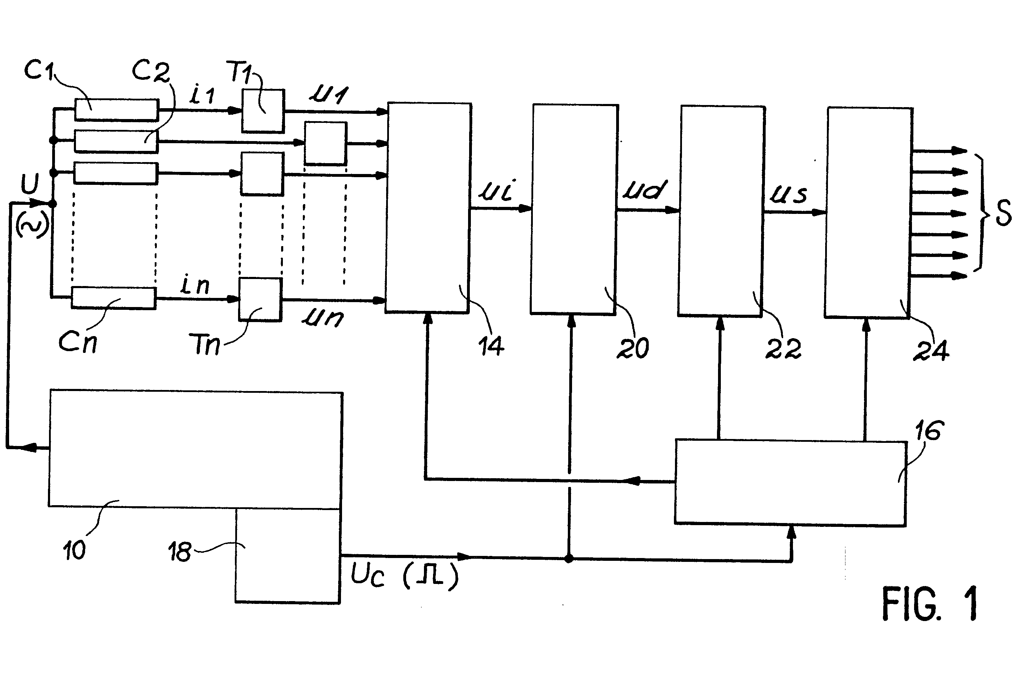

Comme l'illustre la figure 1 de façon très schématique, le dispositif détecteur de profil selon l'invention se compose principalement d'une source de tension sinusoïdale 10 alimentant en parallèle $n$ capteurs à courants de Foucault $C_1$ à $C_n$ alignés en série et disposés en vis-à-vis du profil à détecter. Comme on le verra ultérieurement, selon la nature des capteurs, les signaux $i_1$ à $i_n$ délivrés par ces derniers peuvent être transmis à un multiplexeur 14 soit directement, soit au travers de n étages tampons $T_1$ à $T_n$ qui transforment alors les signaux $i_1$ à $i_n$ en

signaux de tension $u_1$ à $u_n$. La sortie du multiplexeur 14 est commutée successivement sur chacune de ses entrées par un séquenceur 16, lui-même activé par un signal crénelé et de fréquence constante $U_c$ émis par un oscillateur 18 servant comme on le verra ultérieurement à asservir en fréquence et en phase le signal sinusoïdal U délivré par la source de tension 10.

Le signal $u_i$ sortant du multiplexeur 14 est injecté dans un détecteur synchrone 20, 22 commandé par le signal crénelé $U_c$ et comportant un multiplicateur 20 délivrant en sortie un signal $u_d$ dont les caractéristiques seront analysées ultérieurement. Ce signal $u_d$ est filtré dans un circuit de filtrage 22 également contrôlé par le séquenceur 16. Le signal analogique $u_s$ délivré par le circuit 22 est ensuite converti en un signal numérique, puis linéarisé par des circuits également contrôlés par le séquenceur 16 et représentés schématiquement par le bloc 24 sur la figure 1. Le nombre de sorties des circuits 24 permettant d'afficher le signal numérique S est déterminé selon l'exploitation ultérieure qui doit en être faite pour un calculateur. Par exemple, les circuits 24 comprendront huit sorties si l'exploitation ultérieure doit se faire sur un calculateur travaillant sur huit bits.

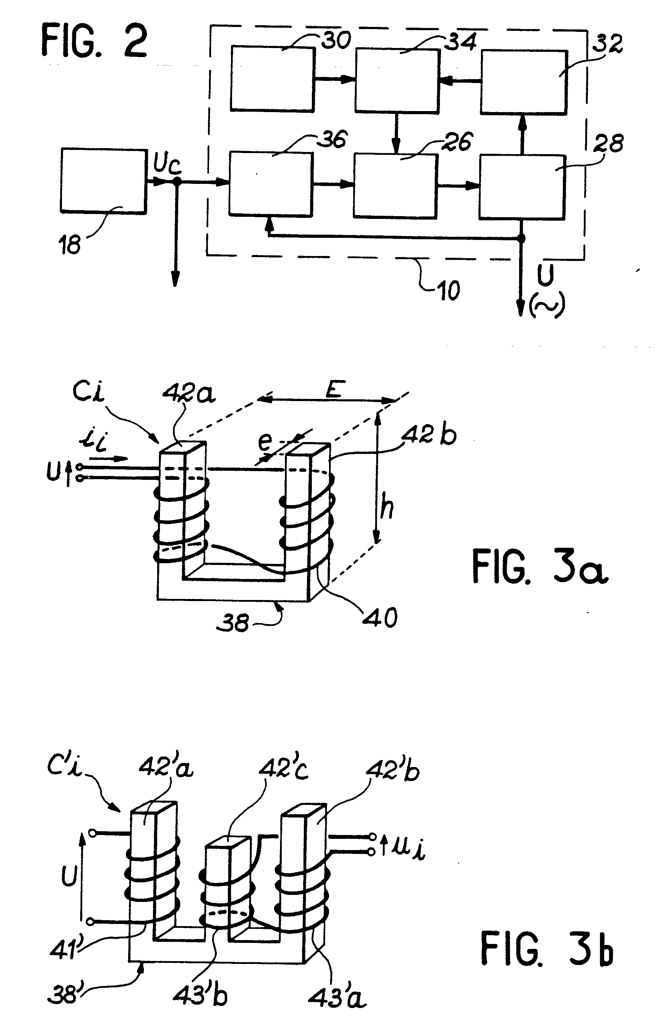

Les différents éléments constituant le dispositif de détection de profil représenté sur la figure 1 vont maintenant être décrits plus en détail en se référant aux figures 2 à 9.

On voit tout d'abord en se référant à la figure 2 que la source de tension 10 comprend un oscillateur 26, asservi en fréquence, en phase et en amplitude. Un amplificateur de puissance 28 alimenté par l'oscillateur 26 délivre une tension sinusoïdale U de fréquence et d'amplitude constantes, pour ne pas perturber la précision du dispositif.

L'asservissement en amplitude de l'oscillateur 26 est réalisé au moyen d'une source de tension de référence 30. L'amplitude du signal U délivré par l'amplificateur 28 est détectée par un détecteur d'amplitude 32 et comparée à la tension de référence délivrée par la source 30 dans un comparateur 34 dont la sortie agit sur l'oscillateur 26, de façon à corriger l'amplitude du signal délivré par celui-ci. La tension sinusoïdale U d'alimentation des bobines des capteurs présente ainsi une amplitude constante. En conséquence, le flux est forcé ce qui contribue à assurer l'indépendance de chaque capteur vis-à-vis des capteurs voisins.

De façon comparable, la phase du signal sinusoïdal U délivré par l'amplificateur 28 est comparée à la phase d'un signal servant de référence dans un comparateur de phase 36 dont la sortie agit sur l'oscillateur 26, afin de corriger la fréquence du signal appliqué par ce dernier à l'amplificateur de puissance 28.

Conformément à un mode de réalisation de l'invention, la référence de fréquence servant à asservir en fréquence et en phase le signal délivré par l'oscillateur 26 est donnée par l'oscillateur 18 délivrant le signal $U_c$ injecté au détecteur synchrone 20 et servant à commander le séquenceur 16 comme on l'a vu précédemment en se référant à la figure 1. Ceci permet d'éliminer les parasites qui seraient produits par une commutation aléatoire. Pour garantir la stabilité en fréquence du signal de référence $U_c$, l'oscillateur 18 est de préférence un oscillateur piloté par quartz.

Le comparateur de phase 36 permet de maintenir en permanence entre le signal sinusoïdal U servant à alimenter les capteurs $C_1$ à $C_n$ et le signal de référence $U_c$ délivré par l'oscillateur 18 un déphasage β constant. En raison de la bonne stabilité en fréquence du signal $U_c$ délivré par l'oscillateur 18, la stabilité en fréquence du signal sinusoïdal U délivré par la source de tension 10 se trouve ainsi assurée.

Le déphasage β établi par le comparateur de phase 36 entre les signaux U et $U_c$ est fixé de manière à ne mesurer que les variations d'inductance de la bobine du capteur. Dans le cas du capteur décrit en référence à la figure 3a, ce déphasage vaut $\frac{\pi}{2}$; dans le cas du capteur décrit en référence à la figure 3b, il vaut 0. On comprendra l'importance de cette caractéristique en remarquant que l'inductance est la seule grandeur ne dépendant que de la distance séparant le capteur de la surface métallique et quasi- indépendante de la température.

La fréquence du signal sinusoïdal U servant à alimenter les bobines des capteurs est choisie de telle sorte que l'onde électromagnétique émise par les capteurs ne pénètre pas une tôle métallique (aluminium, fer, alliages divers, cuivre, etc...) de plus de 1/10ème de mm. Le choix d'une épaisseur de pénétration faible permet de s'affranchir de la perméabilité du métal, des défauts à l'intérieur de sa structure, de sa nature et de sa température.

Par ailleurs, l'asservissement en tension du signal sinusoïdal U d'alimentation des capteurs $C_1$ à $C_n$ permet d'établir dans ceux-ci un flux forcé ne dépendant pas de la distance à une tôle. Le courant $i_1$ à $i_n$ délivré par chacun des capteurs $C_1$ à $C_n$ peut alors être mesuré en module et en phase.

Chacun des capteurs d'une série de capteurs $C_1$ à $C_n$ présente une structure originale conférant à son circuit magnétique un caractère directif les rendant pratiquement insensibles à une masse métallique décalée par rapport à la direction ainsi définie. De plus, la série de capteurs peut comporter des éléments complémentaires servant de blindage entre les capteurs et contre les parasites électromagnétiques d'origine extérieure et permettant d'améliorer la portée de chacun des capteurs.

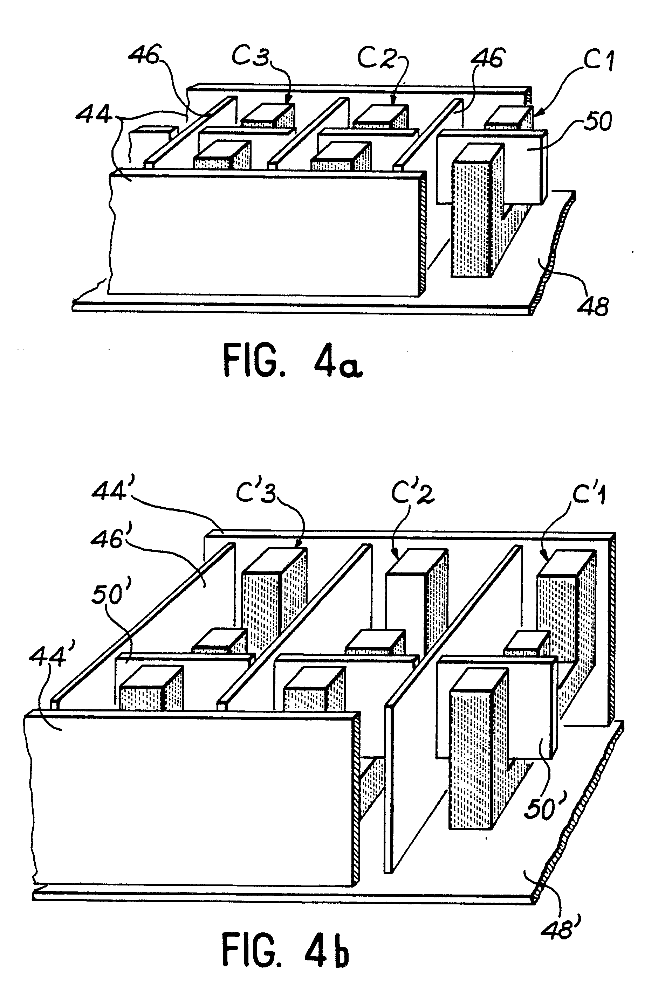

Deux variantes de réalisation permettant d'obtenir de tels résultats vont maintenant être décrites en se référant aux figures 3a et 3b ainsi qu'aux figures 4a et 4b.

Dans une première variante de réalisation représentée sur la figure 3a, chaque capteur $C_i$ comprend un noyau magnétique 38 en forme de U et une bobine 40.

Grâce aux caractéristiques du capteur qui vient d'être décrit en se référant à la figure 3a, on voit qu'on réalise un circuit magnétique directif puisque les lignes de champ sont fermées entre les extrémités des branches 42a et 42b du noyau 38 et restent pratiquement toutes situées à proximité immédiate du plan passant par les axes de ces branches.

De plus, ces capteurs présentent une faible épaisseur $e$ autorisant une résolution axiale élevée le long du profil à détecter. En outre, cet encombrement réduit ne diminue aucunement leur portée.

A titre d'exemple, pour un capteur présentant une épaisseur $e$ de 7 mm, une hauteur $h$ de 10 mm et une largeur E de 16 mm, on a obtenu une portée de 25 mm.

Comme l'illustre la figure 4a, les capteurs $C_1$ à $C_n$ selon la variante de réalisation de la figure 3a sont alignés en vis-à-vis du profil à détecter, de telle sorte que les plans passant par les axes de chacune des branches 42a et 42b de chaque capteur soient parallèles entre eux. De plus, l'immunité aux parasites électromagnétiques d'origine extérieure et l'indépendance entre capteurs peuvent être améliorées en disposant de part et d'autre de la série de capteurs alignés des plaques métalliques 44, et en disposant entre les capteurs des plaques métalliques 46. Ces plaques 46 et 44 sont supportées par une plaque 48 disposée derrière la série de capteurs, du côté opposé aux extrémités des branches 42a et 42b en vis-à-vis desquelles se trouve la surface dont on souhaite détecter le profil.

De plus, la portée des capteurs pour des dimensions données de ceux-ci peut être accrue en disposant entre chacune des branches 42a et 42b d'un même capteur une plaque métallique 50. En effet, cette plaque permet de supprimer les lignes de champ qui vont directement d'un pôle à l'autre, de telle sorte que les lignes de champ sont rallongées. Comme l'illustre la figure 4a, ces plaques 50 peuvent notamment être supportées par les plaques 46, dont elles doivent être isolées électriquement.

Il est à noter que l'association en ligne des capteurs $C_1$ à $C_n$ modifie notablement les caractéristiques. L'excitation simultanée et en phase de tous les capteurs permet une amélioration notable de la portée. En effet, à une certaine distance de la ligne de capteurs, le champ magnétique est équivalent à celui qui serait créé par un circuit magnétique linéaire et décroît selon une loi en $1/x^2$ selon l'axe x qui s'étend parallèlement aux branches 42a et 42b des capteurs, alors qu'il décroît selon une loi en $1/x^3$ pour un capteur isolé. La conséquence de ce phénomène est une meilleure focalisation des lignes de champ magnétique émises; donc une meilleure concentration du flux, lorsqu'on s'éloigne des capteurs. La portée des capteurs est donc accrue, de même que leur directivité.

Sur la figure 3b, on a représenté une autre variante de réalisation de chacun des capteurs pouvant être utilisés conformément à l'invention.

Les capteurs de la figure 3b et les éléments qui les constituent sont désignés par les mêmes références que les capteurs $C_i$, affectées du signe'.

Dans cette variante, chaque capteur $C'_i$ comprend un noyau magnétique 38' en forme de E, une bobine émettrice 41' enroulée sur la branche d'extrémité 42'a du noyau 38' et une bobine réceptrice en deux parties 43'a et 43'b enroulées respectivement sur l'autre branche d'extrémité 42'b et sur la branche intermédiaire 42'c du noyau 38'. L'enroulement des deux parties 43'a et 43'b du bobinage récepteur sur les branches 42'b et 42'c est réalisé en sens inverse, comme l'illustre la figure 3b.

Le capteur $C'_i$ représenté sur la figure 3b est tel que le flux parcourant la branche émettrice 42'a se referme en se partageant entre les deux branches 42'b et 42'c. La bobine réceptrice enroulée en partie dans un sens sur la branche 42'b, en partie dans l'autre sens sur la branche 42'c, délivre à ses bornes une tension $U_i$ proportionnelle à la différence des deux flux.

Dans le capteur de la figure 3b, la hauteur de chacune des branches 42'a, 42'b et 42'c est choisie de préférence de manière à ce que la tension de sortie soit nulle lorsqu'il n'y a pas de tôle en face du capteur. Cette caractéristique permet d'augmenter la sensibilité du capteur pour les tôles éloignées, et donc sa portée.

La variante de la figure 3b présente les mêmes avantages que la variante de la figure 3a. En particulier, elle permet de localiser les lignes de champ approximativement dans un plan passant par les axes des trois branches du noyau 38' et elle présente un encombrement minimum pour une portée donnée et une résolution axiale élevée.

De plus, par rapport au capteur de la figure 3a, le capteur de la figure 3b présente l'avantage d'être de type différentiel, ce qui lui confère une bonne stabilité en température et dans le temps.

Comme l'illustre la figure 4b, les capteurs $C'_1$ à $C'_n$ sont disposés selon une série alignée, de la même façon que les capteurs $C_1$ à $C_n$ dans la variante de réalisation de la figure 4a. De même, des plaques métalliques 44' et 46' jouant le rôle de blindages sont disposées de préférence autour des capteurs et fixées sur une plaque 48'. Enfin, des plaques 50' peuvent être disposées entre les branches 42'a et 42'c de chaque capteur, afin d'en accroître la portée.

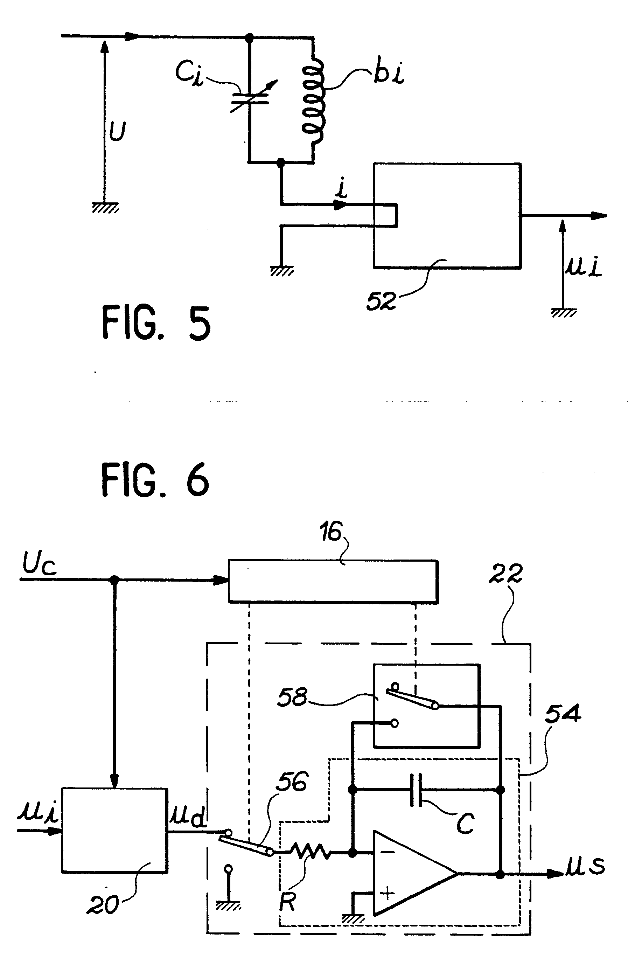

Dans le cas des capteurs non différentiels représentés sur la figure 3a, le signal de sortie $i_i$ de chaque capteur est dirigé sur un étage tampon $T_i$ (figure 1) dont les caractéristiques vont être décrites plus en détail en se référant à la figure 5.

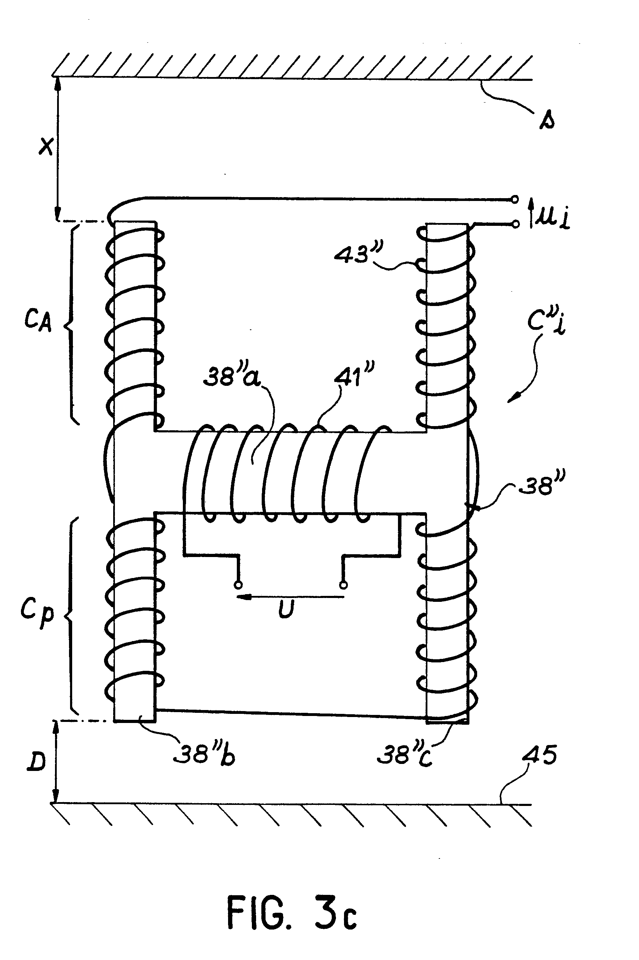

Sur la figure 3c, on a représenté une troisième variante de réalisation de chacun des capteurs pouvant être utilisés conformément à l'invention. Les capteurs de la figure 3c et les éléments qui les constituent sont désignés par les mêmes références que les capteurs $C_i$, affectées du signe''.

Dans cette variante, chaque capteur $C''_i$ comprend un noyau magnétique 38'' en forme de H, une bobine d'excitation 41'' enroulée sur la branche intermédiaire 38''a du noyau 38'' et une bobine réceptrice 43'' enroulée sur chacune des autres branches 38''b et 38''c du noyau 38'', de part et d'autre de la branche intermédiaire 38''a. Comme dans le cas de la figure 3b, l'enroulement de la bobine réceptrice 43'' sur les branches 38''b et 38''c est réalisé en sens inverse.

Si l'on dispose à une distance D donnée en face des parties des branches 38''b et 38''c situées d'un même côté de la branche intermédiaire 38''a, un plan conducteur de référence 45, on réalise avec la partie correspondante de la bobine réceptrice 43'' un capteur passif de référence $C_p$. Au contraire, les parties opposées des branches 38''b et 38''c, ainsi que la partie correspondante de la bobine 43'', qui sont placées en face de la surface conductric es dont on désire mesurer la distance x, constituent un capteur actif $C_A$.

Chacun des capteurs $C''_i$ de la ligne de capteurs permet ainsi d'effectuer une mesure différentielle qui favorise la réjection des dérives éventuelles. De plus, la structure décrite permet d'associer cette différence à un quotient, ce qui conduit à réduire la dynamique des variations observées sur la différence. Par rapport à des capteurs en U tels que celui de la figure 3a, on réduit ainsi la non linéarité de la réponse du capteur et on en accroît la sensibilité.

Bien entendu, la ligne de capteurs $C''_i$ à $C''_n$ peut être réalisée de façon comparable à celle qui a été décrite pour les capteurs $C_i$ et $C'_i$ en se référant aux figures 4a et 4b.

On reconnaît sur la figure 5 la bobine $b_i$ du capteur $C_i$, (bobine 40). Grâce à l'utilisation d'une source de tension 10 asservie en fréquence, en phase et en amplitude, la bobine $b_i$ est alimentée sous une tension constante U. Conformément à l'invention, la bobine $b_i$ est parcourue par un courant i dont les variations sont représentatives des seules variations de l'impédance de la bobine engendrées par les variations de la distance séparant le capteur de la surface métallique en vis-à-vis.

L'étage tampon qui est associé à chacun des capteurs $C_1$ à $C_n$ lorsque ceux-ci sont réalisés conformément à la variante de réalisation de la figure 3a a pour double fonction de transformer le signal de courant i en un signal de tension $u_i$ et de régler le niveau de tension de telle sorte que celle-ci soit nulle lorsqu'il n'y a pas de tôle en face du capteur.

A cet effet, le courant i traversant la bobine $b_i$ est injecté dans un convertisseur courant-tension 52 et une capacité $c_i$ est montée en parallèle sur chacune des bobines $b_i$. La capacité $c_i$ a pour effet de rajouter une constante au signal démodulé, constante qui est réglée de façon à obtenir une tension démodulée nulle lorsqu'il n'y a pas de tôle en face du capteur.

Cette caractéristique présente deux avantages. Elle permet tout d'abord de diminuer le courant fourni par l'amplificateur, car la bobine et la capacité forment alors un circuit bouchon accordé. Elle permet aussi d'améliorer la dynamique et la précision du dispositif, car on supprime la composante continue autour de laquelle varie le signal détecté.

En outre, il faut remarquer que l'impédance d'entrée du convertisseur 52 est très faible, ce qui permet de maintenir constante la tension d'alimentation U aux bornes de la bobine.

Si l'on se réfère à nouveau à la figure 1, on voit que chacun des signaux de tension $u_i$ sortant des convertisseurs 52 dans la variante de réalisation de la figure 3a ou sortant directement du capteur $C'_i$ dans la variante de réalisation de la figure 3b, sont injectés dans le multiplexeur 14 qui les transmet à tour de rôle au détecteur synchrone 20 sous l'action du séquenceur 16. Le multiplexeur 14 est de type analogique à n entrées. Il est commandé par le séquenceur 16, constitué par une logique de commande synchrone du signal crénelé $U_c$, pour supprimer l'effet d'un déphasage aléatoire sur les régimes transitoires.

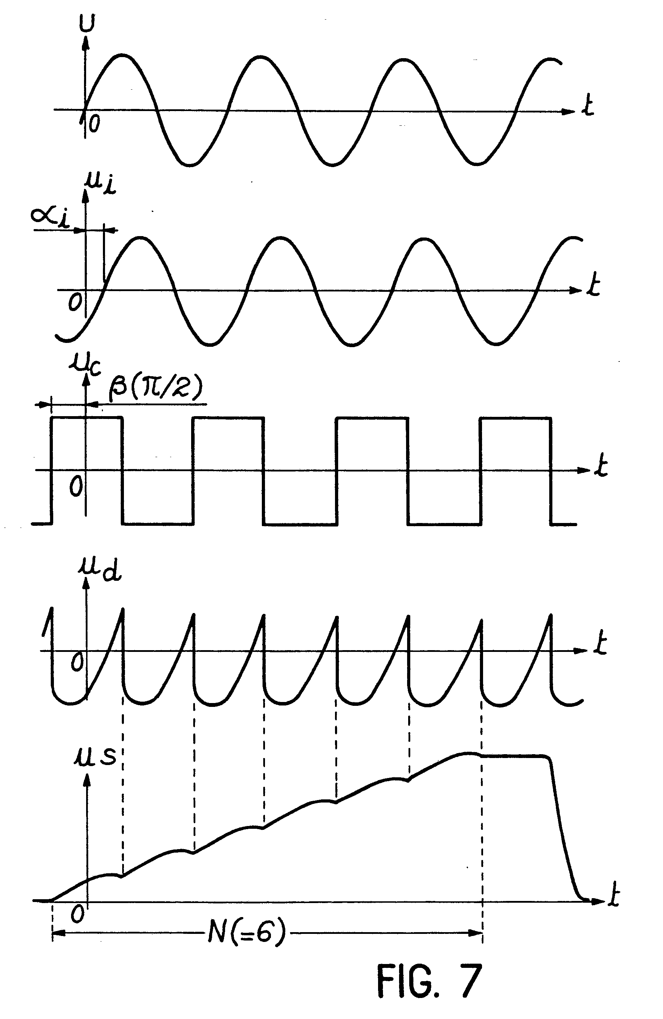

Comme l'illustre la figure 7, chacun des signaux $u_i$ est déphasé de $\alpha_i$ et c'est la composante inductive en quadrature $u_i \sin \alpha_i$ qui caractérise la distance séparant le capteur correspondant de la surface en vis-à-vis, par rapport au signal U alimentant les capteurs. Par ailleurs, le signal crénelé $u_c$ délivré par l'oscillateur 18 a la même fréquence que le signal U et, par conséquent, que chacun des signaux $u_i$, mais il présente un déphasage $\beta$, de préférence égal à $\frac{\pi}{2}$, par rapport au signal U.

Le multiplicateur 20, qui reçoit simultanément les signaux $u_i$ et $U_c$, a pour fonction de multiplier ces signaux l'un par l'autre afin de délivrer un signal $u_d$ correspondant au signal $U_c$ pendant les demipériodes positives du signal $U_c$ et à l'inverse du signal $u_i$ pendant les demi-périodes négatives du signal $U_c$. Il est clair que la valeur moyenne du signal résultant est proportionnelle à la composante en quadrature $u_i \sin \alpha_i$ du signal délivré par le capteur.

On voit sur la figure 6 que le signal $u_d$ est introduit dans un filtre 22 constitué principalement par un intégrateur 54 associé à un commutateur d'entrée 56 et à un commutateur de remise à zéro 58. De façon plus précise, le signal $u_d$ est injecté à l'entrée négative de l'intégrateur 54 au travers du commutateur 56. Le commutateur de remise à zéro 58 est monté en parallèle sur la capacité C de l'intégrateur 54. L'entrée positive de l'intégrateur est reliée à la terre.

Les commutateurs 56 et 58 sont commandés par le séquenceur 16, de façon à faire fonctionner l'intégrateur 54 pendant un nombre entier N de périodes du signal $u_d$ et à remettre le système à zéro avant d'injecter un signal $u_d$ correspondant à un autre capteur. L'allure du signal $u_s$ ainsi obtenue est représentée sur la figure 7. On voit que la valeur du signal $u_s$ obtenue après un nombre N de périodes est représentative de la composante en quadrature $u_i \sin \alpha_i$ du signal $u_i$

délivré par chacun des capteurs et, par conséquent, de la distance séparant ces capteurs de la surface en vis-à-vis.

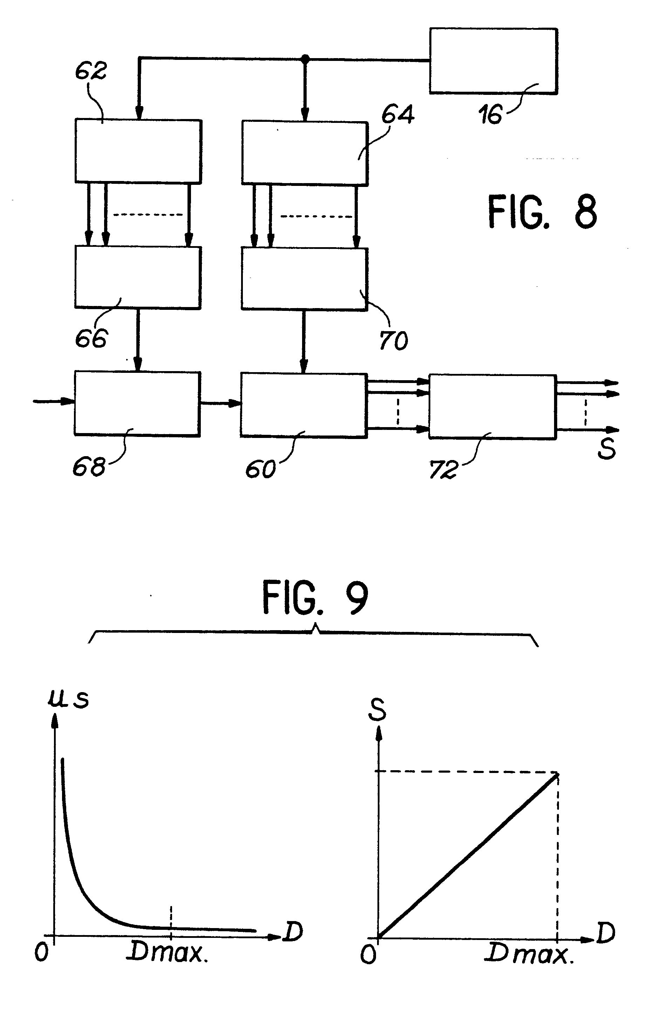

Le signal analogique de tension continu $u_s$ ansi obtenu à la sortie de l'intégrateur 54 doit ensuite être converti en numérique, afin d'être exploité ultérieurement notamment par un calculateur huit bits. Comme l'illustre la figure 8, cette conversion est réalisée par un convertisseur analogique-numérique 60. On adjoint à ce convertisseur un système de correction automatique de l'amplitude et de la composante continue des signaux, ainsi qu'un système de linéarisation.

Le système de correction de l'amplitude et de la composante continue des signaux, également représenté sur la figure 8, comprend deux mémoires 62 et 64 dans lesquelles sont enregistrées les corrections à effectuer pour chaque capteur afin que les courbes de réponse s'insèrent dans le même gabarit. Cet enregistrement des corrections de l'amplitude et de la composante continue respectivement dans les mémoires 62 et 64 est réalisé lors d'un étalonnage préalable du système effectué une fois pour toutes.

Le signal numérique de correction d'amplitude enregistré dans la mémoire 62 pour un capteur donné est converti en analogique dans un convertisseur numérique-analogique 66, avant d'être ajouté au signal $u_s$ correspondant à ce capteur dans un sommateur 68. Par ailleurs, le signal numérique de correction de la composante continue enregistré dans la mémoire 64 et correspondant à ce même capteur est transformé en analogique dans un deuxième convertisseur numérique-analogique 70, avant d'être injecté dans le convertisseur analogique-numérique 60 pour corriger la composante continue.

De plus, suivant le type de capteur utilisé, il peut être nécessaire de disposer deux témoins permettant d'analyser en permanence l'évolution de leurs caractéristiques et de corriger les contenus des mémoires d'amplitude et de la composante continue pour compenser toute dérive éventuelle due, par exemple, à la température. L'un de ces deux témoins peut notamment être calé sur une tôle alors que l'autre peut être placé à une distance finie de cette tôle.

Bien entendu, l'adressage des mémoires 62 et 64 est commandé par le séquenceur 16 simultanément avec le multiplexeur 14 et l'intégrateur de filtrage 54.

Comme l'illustre également la figure 8, le signal sortant du convertisseur 60 sert à adresser une mémoire de linéarisation 72 dans laquelle a été enregistrée préalablement une courbe d'étalonnage. Cette courbe est obtenue pendant l'étalonnage en mettant en mémoire la relation non linéaire entre la distance D et la valeur correspondante du signal $u_s$ représentée sur la figure 9a. Lors des mesures, cette mémoire est lue en prenant $u_s$ comme entrée; la sortie S correspondante est alors proportionnelle à D comme indiqué sur la figure 9b.

Des essais du dispositif selon l'invention effectués sur un prototype ont donné des résultats très satisfaisants. En particulier, la portée des capteurs est pratiquement doublée par rapport aux dispositifs selon la technique antérieure, grâce à la disposition du circuit magnétique et au circuit de traitement électronique. De plus, la réduction des dimensions des capteurs pour une portée satisfaisante permet d'obtenir une résolution axiale importante.

## Revendications

1. Dispositif pour mesurer la distance à une surface métallique conductrice, comprenant au moins un capteur à courants de Foucault ($C_1$,... $C_i$, $C_n$; $C'_1$,... $C'_i$,... $C'_n$) disposé en vis-à-vis de la surface, chaque capteur comprenant au moins une bobine (40'; 41', 43'a, 43'b), une source (10) de tension sinusoïdale (U) alimentant ledit capteur et délivrant une tension sinusoïdale dont la fréquence est supérieure à 100 kHz, et des moyens de traitement (20, 22, 24) du signal sinusoïdal ($u_i$) délivré par le capteur, ces moyens de traitement comprenant des moyens de détection (20, 22) sensibles à un signal de référence ($U_c$) délivré par un oscillateur (18), ce signal de référence ($U_c$) étant un signal de même fréquence et déphasé d'un angle ($\beta$) déterminé par rapport à ladite tension sinusoïdale (U), caractérisé en ce que les moyens de détection sont des moyens de détection synchrone (20, 22) pour mesurer la composante inductive seule de l'impédance de la bobine, des moyens (62 à 70) étant prévus pour corriger automatiquement l'amplitude et la composante continue du signal sinusoïdal délivré par le capteur, ces moyens de correction comprenant des mémoires (66, 70) dans lesquelles sont enregistrées les corrections à apporter, le dispositif comprenant de plus au moins un capteur témoin (Cp) placé dans une position fixe par rapport à une surface de référence (45), ce capteur étant relié aux mémoires (66, 70) de telle sorte que l'évolution de ses caractéristiques permette de corriger les contenus des mémoires, les signaux délivrés par les moyens de détection synchrone étant introduits dans un convertisseur analogique-numérique (60) et les signaux numériques délivrés par le convertisseur (60) adressant une mémoire numérique de linéarisation (72) dans laquelle est enregistrée une courbe d'étalonnage.

2. Dispositif selon la revendication 1, caractérisé en ce que ladite source (10) comprend un deuxième oscillateur (26) et des moyens (18, 30 à 36) pour asservir ledit oscillateur en amplitude et en fréquence.

3. Dispositif selon l'une quelconque des revendications 1 et 2, caractérisé en ce que la bobine (40) du capteur ($C_1$... $C_i$,... $C_n$) est montée sur un circuit magnétique (38) en forme de U ouvert dans la direction de ladite surface, ladite source (10) étant branchée directement aux bornes de la bobine, et le signal sinusoïdal ($u_i$) délivré par le capteur étant obtenu à partir du courant ($i_i$) parcourant la bobine au moyen d'un transformateur courant-tension à faible impédance d'entrée (52).

4. Dispositif selon l'une quelconque des revendications 1 à 3, caractérisé en ce que le capteur ($C'_1$,..., $C'_i$,... $C'_n$) comprend un circuit magnétique (38') en forme de E ouvert dans la direction de ladite surface, une bobine émettrice (41') montée sur l'une des branches d'extrémité (42'a) et une bobine réceptrice (43'a, 43'b) enroulée en partie sur l'autre branche d'extrémité (42'b) et en partie sur la branche intermédiaire (42'c), ladite source (10) étant branchée aux bornes de la bobine émettrice (41'), et le signal sinusoïdal ($u_i$) délivré par le capteur étant obtenu par mise en opposition des signaux induits dans les deux parties (43'a, 43'b) de la bobine réceptrice.

5. Dispositif selon l'une quelconque des revendications 1 à 4, caractérisé en ce que le capteur ($C''_1$,... $C''_i$,... $C''_n$) comprend un circuit magnétique (38'') en forme de H, une bobine d'excitation (41'') montée sur la branche intermédiaire (38''a) du circuit magnétique, une bobine réceptrice (43'') montée sur les branches d'extrémité (38''b, 38''c) du circuit magnétique et la surface conductrice de référence (45) disposé à une distance donnée des extrémités des branches d'extrémité (38''b, 38''c) situées du côté opposé à la surface (s) dont on désire mesurer la distance, ladite source (10) étant branchée aux bornes de la bobine d'excitation (41'').

6. Dispositif selon l'une quelconque des revendications 1 à 5, appliqué à la détection du profil d'une surface métallique conductrice, caractérisé en ce qu'il comprend au moins une série de capteurs à courants de Foucault ($C_1$,... $C_i$,... $C_n$; $C'_1$,... $C'_i$,..... $C'_n$) alignés, ladite source (10) alimentant simultanément les capteurs, des moyens de multiplexage (14) étant prévus pour injecter successivement dans les moyens de traitement (20, 22, 24) chacun des signaux ($u_i$) délivrés par les capteurs.

7. Dispositif selon la revendication 6, caractérisé en ce qu'il comprend plusieurs capteurs élémentaires ($C_i$, $C'_i$) juxtaposés, chaque capteur élémentaire comportant au moins une bobine à courants de Foucault montée sur un circuit magnétique (38, 38') ouvert dans la direction d'un objet métallique dont on désire mesurer la distance, les capteurs élémentaires étant juxtaposés de telle sorte que leurs circuits magnétiques soient disposés dans des plans parallèles.

8. Dispositif selon la revendication 7, caractérisé en ce que les capteurs ($C_i$, $C'_i$) sont séparés et entourés par des plaques métalliques (44, 46; 44', 46')

9. Dispositif selon la revendication 8, caractérisé en ce que les branches parallèles polarisées en sens inverse de chacun des capteurs sont séparées par une plaque métallique (50, 50').

**Patentansprüche**

1. Vorrichtung zum Messen der Nähe einer metallischen leitenden Oberfläche, mit wenigstens einem gegenüber der Fläche angeordneten Wirbelstromfühler ($C_1$,.... $C_i$, $C_n$; $C'_1$,... $C'_i$,.... $C'_n$) mit jeweils wenigstens einer Spule (40; 41', 43'a, 43'b), einer den Fühler speisenden und eine Sinusspannung (U) mit einer Frequenz von mehr als 100 kHz liefernden Sinusspannungsquelle (10), und mit Einrichtungen (20, 22, 24) zum Verarbeiten des von dem Fühler gelieferten Sinussignals ($u_i$) mit einer auf ein von einem Oszillator (18) geliefertes Bezugssignal ($U_c$) ansprechenden Meßeinrichtung (20, 22), wobei das Bezugssignal ($U_c$) die gleiche Frequenz aufweist wie die genannte Sinusspannung und um einen bestimmten Winkel (β) gegenüber dieser phasenversetzt ist, dadurch <u>gekennzeichnet</u>, daß die Meßeinrichtung eine Synchron-Meßeinrichtung (20, 22) zum Messen allein der induktiven Komponente der Impedanz der Spule ist, daß eine Einrichtung (62 bis 70) zum automatischen Korrigieren der Amplitude und der Gleichspannungskomponente des von dem Fühler gelieferten Sinussignals vorgesehen ist, mit Speichern (66, 70), in denen die auszuführenden Korrekturen gespeichert sind, daß die Vorrichtung ferner wenigstens einen Eichfühler ($C_p$) aufweist, welcher in einer festen Stellung relativ zu einer Bezugsfläche (45) angeordnet und derart mit den Speichern (66, 70) verbunden ist, daß der Inhalt der Speicher durch den Verlauf seiner Charakteristik korrigierbar ist, daß die durch die Synchron-Meßeinrichtung gelieferten Signale einem Analog-Digitalwandler (60) zugeführt werden und daß die von dem Wandler (60) gelieferten numerischen Signale einen numerischen Linearisierungsspeicher (72) ansteuern, in welchem eine Eichkurve gespeichert ist.

2. Vorrichtung nach Anspruch 1, dadurch <u>gekennzeichnet</u>, daß die Quelle (10) einen zweiten Oszillator (26) sowie Einrichtungen (18, 30 bis 36) zum Steuern der Amplitude und der Frequenz des Oszillators aufweist.

3. Vorrichtung nach einem der Ansprüche 1 und 2, dadurch <u>gekennzeichnet</u>, daß die Spule (40) des Fühlers ($C_1$,.... $C_i$,.... $C_n$) in einem in Richtung auf die genannte Fläche offenen U-förmigen Magnetkreis (38) angeordnet ist, daß die Quelle (10) direkt mit den Anschlüssen der Spule verbunden ist und daß das von dem Fühler gelieferte Sinussignal ($u_1$) mittels eines eine niedrige Eingangsimpedanz aufweisenden Strom-Spannungswandlers (52) aus dem die Spule durchfließenden Strom ($i_i$) erhalten wird.

4. Vorrichtung nach einem der Ansprüche 1 bis 3, dadurch <u>gekennzeichnet</u>, daß der Fühler ($C'_1$,... $C'_i$,... $C'_n$) einen in Richtung zu der genannten Fläche offenen E-förmigen Magnetkreis (38') aufweist, daß eine Emitterspule (41') auf einem der Endschenkel (42'a) angeordnet und eine Empfängerspule (43'a, 43'b) zum Teil auf den anderen Endschenkel (42'b) und zum Teil auf den mittleren Schenkel (42'c) gewickelt ist, daß die Quelle (10) mit den Anschlüssen der Emitterspule (41') verbunden ist und daß das von dem Fühler gelieferte Sinussignal ($u_i$) durch Gegenüberstellung der in den beiden Teilen der Empfängerspule (43'a, 43'b) induzierten Signale erhalten wird.

5. Vorrichtung nach einem der Ansprüche 1 bis 4, dadurch <u>gekennzeichnet</u>, daß der Fühler ($C''_1$,... $C''_i$,... $C''_n$) einen H-förmigen Magnetkreis (38'') aufweist, daß eine Erregerspule (41'') auf dem Quersteg (38''a) des Magnetkreises und eine Empfängerspule (43'') auf den Endschenkeln (38''b, 38''c) des Magnetkreises angeordnet sind, daß die leitende Bezugsfläche (45) in einem gegebenen Abstand zu den Enden der Endschenkel (38''b, 38''c) gegenüber der Fläche, zu welcher der Abstand gemessen werden soll, angeordnet ist, und daß die Quelle (10) mit den Anschlüssen der Erregerspule (41'') verbunden ist.

6. Vorrichtung nach einem der Ansprüche 1 bis 5, für die Abtastung des Profils einer metallischen leitenden Fläche, dadurch <u>gekennzeichnet</u>, daß sie wenigstens eine ausgerichtete Reihe von Wirbelstromfühlern ($C_1$,.... $C_i$,... $C_n$; $C'_1$,... $C'_i$,.... $C'_n$) aufweist, daß die Quelle die Fühler gleichzeitig speist, und daß eine Multiplexereinrichtung (14) vorgesehen ist, welche die von den Fühlern gelieferten Signale ($u_i$) nacheinander der Verarbeitungseinrichtung (20, 22, 24) zuführt.

7. Vorrichtung nach Anspruch 6, dadurch <u>gekennzeichnet</u>, daß sie meherer nebeneinander angeordnete Elementarfühler ($C_i$, $C'_i$) aufweist, welche jeweils wenigstens eine in einem zu einem Gegenstand, zu welchem der Abstand gemessen werden soll, offenen Magnetkreis (38, 38') angeordnete Wirbelstromspule aufweisen, und daß die Elementarfühler derart nebeneinander angeordnet sind, daß ihre Magnetkreise in parallelen Ebenen liegen.

8. Vorrichtung nach Anspruch 7, dadurch <u>gekennzeichnet</u>, daß die Fühler ($C_i$, $C'_i$) durch metallene Platten (44, 46; 44', 46') voneinander getrennt und von diesen umgeben sind.

9. Vorrichtung nach Anspruch 8, dadurch <u>gekennzeichnet</u>, daß die einander entgegengesetzt polarisierten parallelen Schenkel jedes Fühlers durch eine metallene Platte (50, 50') voneinander getrennt sind.

**Claims**

1. Apparatus for measuring the distance from a conductive metal surface comprising at least one eddy cyrrent transducer ($C_1$,...$C_i$, $C_n$; $C'_1$,...$C'_i$,...$C'_n$) positioned facing the surface, each transducer having at least one coil (40; 41', 43'a, 43'b), a source (10) of sinusoidal voltage (U) supplying said transducer and supplying a sinusoidal voltage, whose frequency exceeds 100 kHz, and means (20, 22, 24) for processing the sinusoidal signal ($U_i$) supplied by the transducer, said processing means comprising detection means sensitive to a reference signal ($U_c$) supplied by an oscillator (18), said reference signal ($U_c$) having the same frequency and being phase shifted by a given angle ($\beta$) with respect to said sinusoidal voltage (U), characterized in that the detection means are synchronous detection means (20, 22) for measuring only the inductive component of the impedance of the coil, means (62 to 70) being provided for automatically correcting the amplitude and the continuous component of the sinusoidal signal supplied by the transducer, said correction means comprising memories (66, 70) in which are recorded the corrections to be made, the apparatus also comprising at least one control transducer ($C_p$) placed in a fixed position with respect to a reference surface (45), said transducer being connected to the memories (66, 70) in such a way that the evolution of its characteristics makes it possible to correct the contents of the memories, the signal supplied by the synchronous detection means being introduced into an analog - digital converter (60) and the digital signals supplied by converter (60) addressing a digital linearization memory (72) in which is recorded a calibration curve.

2. Apparatus according to claim 1, characterized in that said source (10) comprises a second oscillator (26) and means (18, 30 to 36) for controlling said oscillator as regards amplitude and freqyency.

3. Apparatus according to either of the claims 1 and 2, characterized in that the coil (40) of the transducer ($C_1,... C_i,... C_n$) is mounted on a U-shaped magnetic circuit (38) open in the direction of said surface, said source (10) being directly connected to the terminals of the coil and the sinusoidal signal ($u_i$) supplied by the transuducer being obtained from the current ($i_i$) passing through the coil by means of a low input impedance current-voltage transformer (52).

4. Apparatus according to any one of the claims 1 to 3, characterized in that the transducer ($C'_1,..., C'_i,... C'_n$) comprises an E-shaped magnetic circuit (38') open in the direction of said surface, and emitting coil (41') mounted on one of the end branches (42'a) and a receiving coil (43'a, 43'b) partly wound onto the other end branch (42'b) and partly onto the intermediate branch (42'c), said source (10) being connected to the terminals of the emitting coil (41') and the sinusoidal signal ($u_i$) supplied by the transducer being obtained by placing in opposition the signals induced in the two parts (43'a, 43'b) of the receiving coil.

5. Apparatus according to any one of the claims 1 to 4, characterized in that the transducer ($C''_1,... C''_i,...C''_n$) comprises an H-shaped magnetic circuit (38''), an exciting coil (41'') mounted on the intermediate branch (38''a) of the magnetic circuit, a receiving coil (43'') mounted on the end branches (38''b, 38''c) of the magnetic circuit and the conductive reference surface (45) located at a given distance from the ends of the end branches (38''b, 38''c) located on the side opposite to the surface (s) whose distance it is desired to measure, said source (10) being connected to the terminals of the exciting coil (41'').

6. Apparatus according to any one of the claims 1 to 5, applied to the detection of the profile of a conductive metal surface, characterized in that it comprises at least one row of aligned eddy current transducers ($C_1,... C_i,... C_n$; $C'_1,... C'_i,... C'_n$), said source (10) simultaneously supplying the transducers, multiplexing means (14) being provided for successively injecting into the processing means (20, 22, 24) each of the signals ($u_i$) supplied by the transducers.

7. Apparatus according to claim 6, characterized in that it comprises several juxtaposed elementary transducers ($C_i$, $C'_i$), each elementary transducer having at least one eddy current coil mounted on a magnetic circuit (38, 38') open in the direction of a metal object whose distance it is desired to measure, the elementary transducers being juxtaposed in such a way that their magnetic circuits are located in parallel planes.

8. Apparatus according to claim 7, characterized in that the transducers ($C_1$, $C'_i$) are separated and surrounded by metal plates (44, 46; 44', 46').

9. Apparatus according to claim 8, characterized in that the parallel branches polarized in opposite directions of each of the transducers are separated by a metal plate (50, 50').

FIG. 1

# FIG. 2

# FIG. 3a

# FIG. 3b

3

FIG. 3c

FIG. 4a

FIG. 4b

$C_i$  $b_i$

$U$

$i$

52

$u_i$

# FIG. 5

# FIG. 6

$U_C$

16

22

58

54

56

$u_i$  $u_d$

20

$R$

$C$

$u_s$

FIG. 7

FIG. 8

FIG. 9